Europäisches Patentamt

European Patent Office

Office européen des brevets

(19)

(11) Numéro de publication : **0 334 755 B1**

(12)                           FASCICULE DE BREVET EUROPEEN

(45) Date de publication du fascicule du brevet :
29.05.91 Bulletin 91/22

(51) Int. Cl.⁵ : **B60S 1/34**

(21) Numéro de dépôt : 89400800.2

(22) Date de dépôt : 21.03.89

(54) Dispositif d'essuie-glace dissimulable destiné à équiper, par exemple, un véhicule automobile.

(30) Priorité : 25.03.88 FR 8803990

(43) Date de publication de la demande :
27.09.89 Bulletin 89/39

(45) Mention de la délivrance du brevet :
29.05.91 Bulletin 91/22

(84) Etats contractants désignés :
DE GB IT

(56) Documents cités :
DE-A- 3 149 034
DE-A- 3 809 966
US-A- 4 050 832
PATENT ABSTRACTS OF JAPAN vol. 10, no.
55 (M-458)(2112) 05 mars 86, & JP-A-60 203557
(NISSAN) 15 octobre 85,
PATENT ABSTRACTS OF JAPAN vol. 10, no.
200 (M-498)(2256) 12 juillet 86, & JP-A-61 44059
(NISSAN) 03 mars 86,

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Bernard, Claude**
**48 rue Sous-Bois Taillecourt**
**F-25400 Audincourt (FR)**

(74) Mandataire : **Durand, Yves Armand Louis et al**
**CABINET WEINSTEIN 20, Avenue de**
**Friedland**
**F-75008 Paris (FR)**

## Description

La présente invention a essentiellement pour objet un dispositif d'essuie-glace destiné à équiper un véhicule automobile dispositif du genre divulgué par exemple, par US-A-4,050,832, JP-A-203 557/85 ou JP-A-44059/86.

On connaît déjà un dispositif d'essuie-glace constitué, par exemple, d'un bras-support muni à une extrémité d'une raclette en contact sur une vitre d'un véhicule, telle que, par exemple, son pare-brise.

Ce bras-support est relié de façon pivotante, dans un plan sensiblement perpendiculaire à la vitre du véhicule, à un élément d'entraînement qui est lié mécaniquement à un axe moteur d'une part, en rotation par l'intermédiaire d'une liaison cannelée, et d'autre part axialement par l'intermédiaire d'une liaison vis-écrou.

La raclette est maintenue en contact de pression sur le pare-brise ou vitre du véhicule par l'intermédiaire d'un ressort hélicoïdal de traction accroché, d'une part, à une partie médiane du bras-support, et d'autre part sur l'élément d'entraînement par l'intermédiaire d'un crochet retenu sur celui-ci.

Le démontage de ce dispositif est effectué, tout d'abord, en soulevant un capot protecteur qui est monté sur l'élément d'entraînement en pouvant pivoter sur celui-ci, et qui dissimule la tête filetée de l'axe moteur ainsi que l'écrou vissé sur celui-ci.

Ensuite, il est nécessaire de dévisser l'écrou à l'aide d'un outil approprié, puis de repositionner le capot protecteur sur la tête filetée de l'axe moteur, afin de pouvoir incliner, sensiblement à 90°, le bras-support du dispositif par rapport à l'élément d'entraînement dont il est solidaire, pour que la base de ce bras-support qui forme carter vienne en butée sur la partie supérieure de l'élément d'entraînement et que le bras-support trouve, grâce à l'action du ressort, une position quasi-stable.

Ainsi, il est possible, en actionnant manuellement le bras-support suivant un mouvement de basculement alternatif, dans le plan dans lequel il a été pivoté, de désaccoupler l'élément d'entraînement de l'axe moteur.

Cependant, étant donné qu'il est désormais prépondérant de dissimuler toutes les parties saillantes d'un véhicule automobile afin de lui conférer un coefficient de pénétration dans l'air optimum et un excellent aérodynamisme, l'axe moteur et la base du bras-support qui forme carter doivent être recouverts par le haut du capot moteur tandis qu'ils étaient disposés jusqu'ici entre celui-ci et la base du pare-brise ou vitre.

De plus, cette configuration permet de cacher les raclettes sous le capot moteur lorsque le dispositif d'essuie-glace est à l'arrêt, ce qui améliore l'aspect et l'esthétique du véhicule.

Cependant, les dispositifs d'essuie-glace connus ne permettent pas une telle disposition puisque le bras-support, lors du démontage du dispositif, en étant écarté du pare-brise heurte le haut du capot-moteur qui le recouvre partiellement.

Par conséquent, il est impossible d'agir axialement sur la liaison entre l'axe moteur et l'élément d'entraînement, par basculement du bras-support dans un plan perpendiculaire au pare-brise ou vitre puisque le ressort hélicoïdal, qui ne peut être décroché, impose au bras-support des positions instables qui l'entraîne automatiquement vers le pare-brise ou vitre du véhicule.

Ainsi, la présente invention a pour but de remédier à ces inconvénients en proposant un dispositif d'essuie-glace perfectionné, facilement démontable et dont la base ainsi que l'axe moteur qui l'entraîne peuvent être partiellement recouverts par le haut du capot moteur du véhicule.

A cet effet, l'invention a pour objet un dispositif d'essuie-glace du type comprenant d'une part un bras-support dont une extrémité est reliée à une raclette en contact de pression sur une vitre du véhicule, telle que par exemple le pare-brise, tandis que la base de ce bras-support qui forme carter est montée pivotante dans un plan sensiblement perpendiculaire à la vitre, sur un élément d'entraînement lié mécaniquement en rotation à un axe moteur, et d'autre part un moyen de blocage positif susceptible de maintenir en position stable le bras-support par rapport au pare-brise ou vitre lorsque ce bras en est sensiblement écarté, ce moyen de blocage positif comportant un doigt, solidaire de l'élément d'entraînement et susceptible de se translater orthogonalement par rapport à celui-ci pour s'introduire automatiquement dans un orifice correspondant pratiqué dans la base formant carter du bras-support, lors de l'écartement de celui-ci du pare-brise.

Suivant un mode de réalisation de l'invention, le doigt précité est porté par un axe monté coulissant dans un logement pratiqué orthogonalement dans le corps de l'élément d'entraînement, cet axe étant sollicité par un moyen élastique qui l'actionne automatiquement lorsque celui-ci se trouve en regard de l'orifice ménagé dans une paroi latérale du carter.

On précisera encore ici que le moyen élastique est constitué par un ressort hélicoïdal de compression en appui d'une part, contre un fond du logement précité, et d'autre part contre un épaulement formé par la première face d'une collerette agencée autour dudit axe.

Par ailleurs, l'axe précité comporte une butée constituée par une deuxième face de ladite collerette, cette face étant susceptible de venir en appui contre une face interne de la paroi latérale du carter dans laquelle est pratiqué l'orifice.

Mais d'autres caractéristiques et avantages de l'invention apparaîtront mieux dans la description détaillée qui suit et se réfère aux dessins annexés, donnés uniquement à titre d'exemple et dans lesquels :

La figure 1 est une vue partiellement en coupe d'un dispositif connu d'essuie-glace ;

La figure 2 est une vue partiellement en coupe de ce même dispositif, et qui représente plus particulièrement les deux positions du bras-support avant son désaccouplement de l'axe moteur ;

La figure 3 est une vue de dessus d'un véhicule automobile et qui représente les bases respectives des dispositifs d'essuie-glace selon l'invention, partiellement dissimulées sous le capot moteur de ce véhicule ;

La figure 4 est une vue longitudinale partiellement en coupe du dispositif d'essuie-glace selon l'invention et qui représente plus particulièrement les positions active et de désaccouplement du bras support de ce dispositif ;

La figure 5 est une vue en coupe transversale faite suivant la ligne V-V de la figure 4, et qui représente un moyen de blocage positif du dispositif selon l'invention, le bras-support étant en position active ; et

La figure 6 est une vue similaire à la figure 5, mais dans laquelle le bras-support a été pivoté en position de désaccouplement.

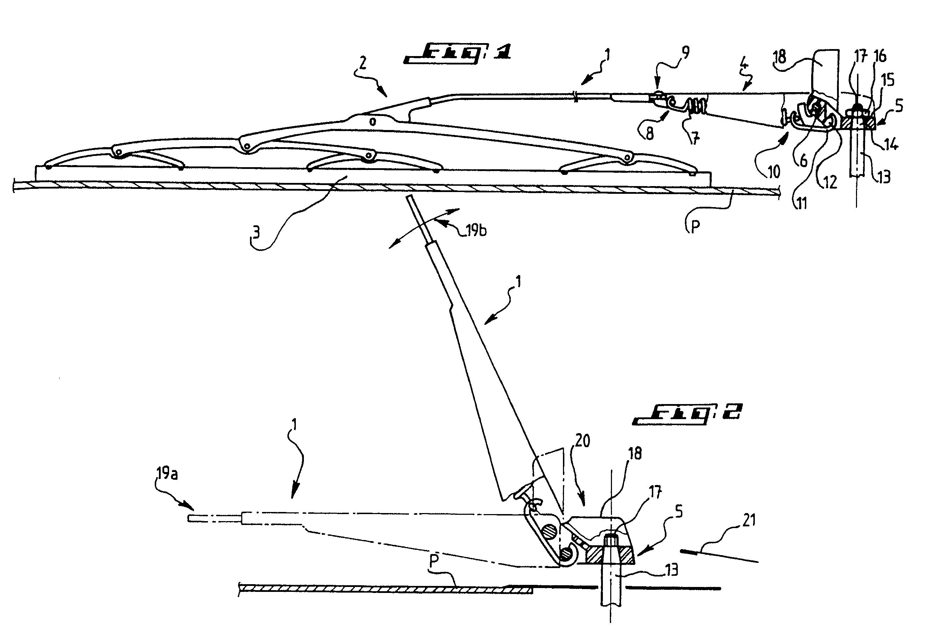

En se reportant à la figure 1, un dispositif d'essuie-glace d'un type connu est constitué d'un bras-support 1 dont une extrémité 2 est reliée à une raclette 3 en contact sur une vitre P, telle qu'un pare-brise d'un véhicule.

D'autre part, le bras-support 1 est pourvu d'une base 4 formant carter, montée pivotante sur un élément d'entraînement 5, par l'intermédiaire d'un axe 6, dans un plan sensiblement perpendiculaire au pare-brise ou vitre P du véhicule.

La raclette 3 est maintenue en contact de pression sur le pare-brise ou vitre par l'intermédiaire d'un ressort hélicoïdal de traction 7 accroché par une première extrémité 8 à une partie médiane 9 du bras-support 1 et relié par une deuxième extrémité 10 à un crochet de liaison 11 retenu par une protubérance 12 de profil semi-circulaire, prévue sur l'élément d'entraînement 5.

Par ailleurs, l'élément d'entraînement 5 est lié mécaniquement en rotation à un axe moteur 13 par l'intermédiaire de cannelures, non représentées, réalisées sur le pourtour extérieur d'une partie intermédiaire conique 14 de l'axe moteur 13, ces cannelures étant susceptibles de s'imprimer dans un orifice conique 15 de l'élément d'entraînement 5 lorsqu'un écrou 16 est vissé sur une tête filetée 17 prévue à l'extrémité de l'axe moteur 13.

Ainsi, l'élément d'entraînement 5 est actionné en rotation par l'axe moteur 13 lié à un moteur électrique approprié, non représenté, tandis que cet élément d'entraînement 5 est bloqué axialement sur l'axe moteur 13 par l'intermédiaire de la liaison conique 14-15 et de l'écrou 16.

Par ailleurs, afin de cacher la tête filetée 17 de l'axe moteur 13 ainsi que l'écrou 16 sur laquelle il est vissé, on prévoit un capot protecteur 18 maintenu libre en rotation sur l'axe 6 de l'élément d'entraînement 5, généralement entre les faces latérales extérieures de cet élément et les faces latérales intérieures de la base 4 du bras-support 1 qui forme carter.

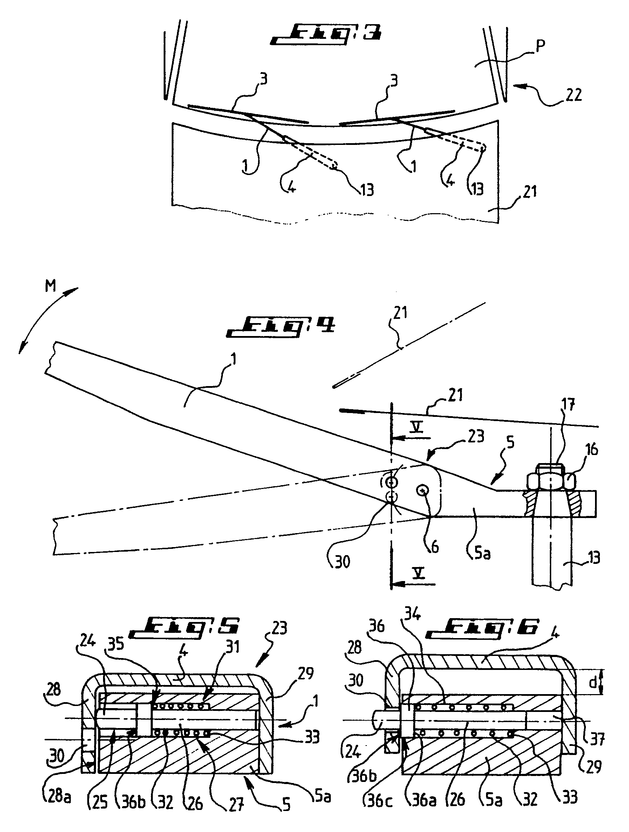

En se référant désormais à la figure 2, on observera que le bras-support 1 a été représenté d'une part en traits interrompus en position active 19a, c'est-à-dire en contact contre le pare-brise ou vitre P du véhicule, et d'autre part en position de désaccouplement 19b.

Ainsi, après avoir soulevé le capot protecteur 18 et après avoir dévissé et ôté l'écrou 16 de la tête filetée 17 de l'axe moteur 13, on replace le capot protecteur 18 et on déplace angulairement le bras-support 1, sensiblement à 90°, afin de l'amener en position stable de désaccouplement 19b par rapport à l'élément d'entraînement 5.

Ainsi, la base 4 du bras-support 1 prenant appui sur une partie supérieure 20 de l'élément d'entraînement 5, on applique au bras-support 1 un mouvement de basculement alternatif dans le plan dans lequel il a été pivoté afin de désaccoupler l'élément d'entraînement 5 de l'axe moteur 13 qui est coincé et qui adhère fortement sur celui-ci.

On remarquera que dans ce dispositif connu le capot 21 du véhicule automobile, ne recouvre pas l'axe moteur 13 et la base 4 du bras-support 1.

Par ailleurs, comme il a été expliqué ci-avant l'axe moteur 13 et la base 4 du bras-support 1 étant disposés entre le haut du capot moteur 21 et le pare-brise ou vitre P, cette disposition, particulièrement visible et saillante, constitue une partie d'accrochage qui diminue le coefficient de pénétration dans l'air du véhicule et limite son aérodynamisme.

Par conséquent, et comme il a été représenté sur la figure 3, on recouvre les axes moteur 13 et les bases 4 des bras-support 1 des dispositifs d'essuie-glace selon l'invention, par le haut du capot moteur 21 du véhicule 22.

Par ailleurs, cette disposition permet de dissimuler complètement les dispositifs d'essuie-glace sous le haut du capot moteur 21 lorsque ces dispositifs sont à l'arrêt.

En se référant aux figures 4 à 6, on remarquera que le dispositif selon l'invention a été pourvu d'un moyen 23 de blocage positif permettant de maintenir en position stable le bras-support 1 par rapport au pare-brise ou vitre P lorsque ce bras en est sensiblement écarté.

Le moyen 23 de blocage positif comporte un doigt 24 porté par une extrémité 25 d'un axe 26 monté coulissant dans un logement 27 pratiqué orthogonalement dans le corps 5a de l'élément d'entraînement 5, au proche de l'axe de rotation 6.

Par ailleurs, la base 4 du bras-support 1 qui forme carter est pourvue de parois latérales 28 et 29 disposées, respectivement, de part et d'autre du corps 5a de l'élément d'entraînement 5.

La paroi latérale 28 est munie d'un orifice 30 dans lequel le doigt 24 qui peut se translater orthogonalement par rapport à l'élément d'entraînement 5, est susceptible de s'introduire, comme visible sur la figure 6, lorsque la base 4 formant carter est écartée d'une distance d par rapport à l'élément d'entraînement 5.

D'autre part, le moyen 23 de blocage positif comporte un moyen élastique 31 constitué par un ressort hélicoïdal de compression 32, en appui d'une part contre un fond 33 d'un alésage 34 formant le logement 27, et d'autre part contre un épaulement 35 constitué par une première face 36a d'une collerette 36, agencée autour de l'axe 26.

Ainsi, le doigt 24 qui est sollicité par le ressort 32 peut s'introduire automatiquement dans l'orifice 30 lorsque le bras-support 1 est écarté du pare-brise ou vitre P.

D'autre part, la collerette 36 comporte une deuxième face 36b qui forme une butée de l'axe 26 lorsque le doigt 24 pénètre dans l'orifice 30, cette face 36b venant en appui contre une face interne 28a de la paroi latérale 28 de la base 4 formant carter.

Aussi, on remarquera que le pourtour extérieur 36c de la collerette 36 forme un moyen de guidage de l'axe 26 dans l'alésage 31.

De même, l'axe 26 est guidé dans un deuxième alésage débouchant 37 qui est adjacent et coaxial à l'alésage 31.

Le démontage du dispositif d'essuie-glace selon l'invention est le suivant :

Après avoir relevé le capot moteur 21 dans la position qui est représentée en traits interrompus sur la figure 4, on dévisse l'écrou 16 à l'aide d'un outil approprié puis on écarte le bras-support 1 du pare-brise ou vitre P dans un plan sensiblement perpendiculaire à celui-ci.

Ainsi, le doigt 24 s'introduit automatiquement dans l'orifice 30, ce qui bloque positivement en position stable le bras-support par rapport à l'élément d'entraînement 5.

Ainsi, on applique au bras-support 1 et à l'élément d'entraînement 5 dont il est solidaire, un mouvement de basculement alternatif suivant la direction représentée par la flèche M, afin de désolidariser l'élément d'entraînement 5 de l'axe moteur 13 qui est maintenu sur celui-ci par coincement.

De plus, il est possible de repositionner le bras-support 1 sur la vitre P du véhicule en appuyant sur le doigt 24 et en abaissant simultanément le bras-support 1, de sorte que le doigt 24 qui s'efface de l'orifice 30 se réarme en venant en appui contre la paroi interne 28a de la base 4 formant carter.

Par ailleurs, on remarquera que le moyen de blocage positif prévu dans ce dispositif peut comporter un deuxième doigt, non représenté, opposé au doigt 24 et susceptible de pénétrer dans un orifice correspondant pratiqué dans la paroi latérale 29 de la base 4 formant carter, les deux doigts étant formés par deux axes respectifs disposés dans un logement formé par un alésage unique, et actionnés dans des directions opposées par un ressort hélicoïdal de compression disposé entre ceux-ci.

Par conséquent, on notera que ce dispositif d'essuie-glace peut être facilement recouvert par le haut du capot moteur 21 en étant facilement démontable manuellement, ce qui améliore considérablement l'aérodynamisme, l'aspect et l'esthétique du véhicule, et ce qui permet d'éliminer le capot protecteur 18.

Bien entendu, l'invention n'est nullement limitée au mode de réalisation unique et illustré et qui n'a été donné qu'à titre d'exemple.

## Revendications

1. Dispositif d'essuie-glace destiné à équiper un véhicule automobile, et du type comportant d'une part un bras-support (1) dont une extrémité est reliée à une raclette ou analogue en contact de pression sur une vitre du véhicule telle que par exemple le pare-brise (P), la base (4) de ce bras (1) qui forme carter étant montée pivotante (6) dans un plan sensiblement perpendiculaire à la vitre, sur un élément d'entraînement lié mécaniquement en rotation à un axe moteur (13), et d'autre part un moyen (23) de blocage positif susceptible de maintenir en position stable le bras-support (1) par rapport à la vitre (P) lorsque ce bras (1) en est sensiblement écarté, caractérisé en ce que le moyen (23) de blocage positif comporte un doigt (24), solidaire de l'élément d'entraînement (5) et susceptible de se translater orthogonalement par rapport à celui-ci pour s'introduire automatiquement dans un orifice (30) correspondant pratiqué dans la base (4) formant carter du bras-support (1), lors de l'écartement de celui-ci du pare-brise (P).

2. Dispositif selon la revendication 1, caractérisé en ce que le doigt (24) précité est porté par un axe (26) monté coulissant dans un logement (27) pratiqué orthogonalement dans le corps (5a) de l'élément d'entraînement (5), cet axe (26) étant sollicité par un moyen élastique (31) qui actionne automatiquement ledit axe lorsque le doigt (24) se trouve en regard de l'orifice (30) ménagé dans une paroi latérale (28) du carter (4).

3. Dispositif selon la revendication 1 ou 2, caractérisé en ce que le moyen élastique (31) est constitué par un ressort hélicoïdal de compression (32) en appui d'une part, contre un fond (33) du logement (27) précité, et d'autre part contre un épaulement (35) formé par la première face (36a) d'une collerette (36) agencée autour dudit axe (26).

4. Dispositif selon la revendication 3, caractérisé en ce que l'axe (26) précité comporte une butée constituée par une deuxième face (36b) de la collerette (36), cette face (36b) étant susceptible de venir en appui contre une face interne (28a) de la paroi latérale (28) du carter (4) dans laquelle est pratiqué l'orifice (30).

## Ansprüche

1. Zur Ausrüstung eines Kraftfahrzeugs bestimmte Scheibenwischervorrichtung, derjenigen Gattung einerseits mit einem Trägerarm (1), dessen eines Ende mit einem in Druckberührung mit einer Fensterscheibe des Fahrzeugs wie zum Beispiel einer Windschutzscheibe (P) stehenden Wischerarm oder dergleichen verbunden ist, wobei der Fussteil (4) dieses Armes (1), der ein Gehäuse bildet, schwenkbar (6) in einer im wesentlichen senkrecht zur Fensterscheibe stehenden Ebene an einem mechanisch drehfest mit einer Motorwelle (13) verbundenen Antriebselement angeordnet ist und andererseits mit einem positiven Hemmungsmittel (23), das fähig ist, den Trägerarm (1) gegenüber der Fensterscheibe (P) in einer stabilen Lage zu halten, wenn dieser Arm (1) von dieser wesentlich abgehoben ist, dadurch gekennzeichnet, dass das positive Hemmungsmittel (23) einen mit dem Antriebselement (5) fest verbundenen Finger (24) aufweist, der fähig ist, sich senkrecht zu diesem parallel zu verschieben, um automatisch in eine in dem ein Gehäuse bildenden Fussteil (4) des Trägerarmes (1) ausgebildeten entsprechenden Oeffnung (30) einzudringen, bei dem Abheben des letzteren von der Windschutzscheibe (P).

2. Vorrichtung nach Anspruch 1, dadurch gekennzeichnet, dass der vorgenannte Finger (24) durch einen in einer senkrecht in dem Körper (5a) des Antriebselementes (5) ausgebildeten Aussparung (27) gleitbar angeordneten Stift (26) getragen wird, wobei dieser Stift (26) durch ein elastisches Mittel (31) beaufschlagt wird, welches den besagten Stift automatisch betätigt, wenn der Finger (24) sich gegenüber der in einer Seitenwandung (28) des Gehäuses (4) ausgebildeten Oeffnung (30) befindet.

3. Vorrichtung nach Anspruch 1 oder 2, dadurch gekennzeichnet, dass das elastische Mittel (31) durch eine sich einerseits an eine Endfläche (33) der vorgenannten Aussparung (27) und andererseits an einer durch eine erste Fläche (36a) eines um den besagten Stift (26) angeordneten Bundes (36) gebildeten Schulter (35) abstützenden Wendeldruckfeder (32) gebildet wird.

4. Vorrichtung nach Anspruch 3, dadurch gekennzeichnet, dass der vorgenannte Stift (26) einen durch eine zweite Fläche (36b) des Bundes (36) gebildeten Anschlag aufweist, wobei diese Fläche (36b) fähig ist, zur Anlage an eine Innenseite (28a) der Seitenwandung (28) des Gehäuses (4), in welcher die Oeffnung (30) ausgebildet ist, zu kommen.

## Claims

1. Windshield wiper device adapted to fit an automotive vehicle and of the type comprising on the one hand a supporting arm (1) one end of which is connected to a scraper or the like in pressure contact with one glass pane of the vehicle such for instance as the windscreen (P), the base (4) of this arm (1) which forms a casing being pivotally mounted (6) in a plane substantially perpendicular to the glass pane on a drive element mechanically connected for rotation with a motor shaft (13) and on the other hand a positive locking means (23) susceptible of keeping the supporting arm (1) in a stable position with respect to the glass pane (P) when this arm (1) is substantially spaced away therefrom, characterized in that the positive locking means (23) comprises a finger (24) solid with the drive element (5) and susceptible of moving in translatory motion orthogonally with respect to the latter to automatically insert itself in a corresponding orifice (30) formed in the casing-forming base (4) of the supporting arm (1) upon moving thereof away from the windscreen (P).

2. Device according to claim 1, characterized in that the aforesaid finger (24) is carried by a pin (26) slidably mounted in a recess (27) orthogonally formed in the body (5a) of the drive element (5), this pin (26) being acted upon by an elastic means (31) which automatically actuates the said pin when the finger (24) is lying in front of the orifice (30) provided in one side wall (28) of the casing (4).

3. Device according to claim 1 or 2, characterized in that the elastic means (31) is constituted by a helical compression spring (32) bearing on the one hand against an end wall (33) of the aforesaid recess (27) and on the other hand against a shoulder (35) formed by the first face (36a) of a collar (36) arranged around the said pin (26).

4. Device according to claim 3, characterized in that the aforesaid pin (26) comprises a stop constituted by a second face (36b) of the collar (36), this face (36b) being susceptible of coming into bearing engagement with an inner face (28a) of the side wall (28) of the casing (4) in which the orifice (30) is formed.

*Fig. 1*

*Fig. 2*

EP 0 334 755 B1

_Fig. 3_

_Fig. 4_

_Fig. 5_

_Fig. 6_